# EUROPÄISCHE PATENTSCHRIFT

(11) **EP 0 439 559 B1**
(45) Veröffentlichungstag und Bekanntmachung des Hinweises auf die Patenterteilung: **13.10.1993**
(21) Anmeldenummer: 90908191.1
(22) Anmeldetag: 26.05.1990
(51) Int. Cl.: B60R 16/02, H02J 13/00

(54) **VERFAHREN ZUR DATENÜBERTRAGUNG ÜBER EINEN SERIELLEN DATENBUS IN VERTEILTEN SYSTEMEN**
DATA TRANSMISSION PROCESS BY SERIAL DATA BUS IN DISTRIBUTED SYSTEMS
PROCEDE DE TRANSMISSION DE DONNEES PAR UN BUS SERIEL DE DONNEES DANS DES SYSTEMES REPARTIS

(30) Priorität: 24.08.1989 DE 3927968
(43) Veröffentlichungstag der Anmeldung: 07.08.1991
(73) Patentinhaber: ROBERT BOSCH GMBH, 70442 Stuttgart (DE)
(72) Erfinder: HOLZINGER, Otto, D-7321 Eschenbach (DE); BORST, Wolfgang, D-7141 Schwieberdingen (DE); KLENK, Martin, D-7150 Backnang (DE); LOEWL, Wolfgang, D-7142 Marbach (DE); BREUSER, Erich, D-7143 Vaihingen/Enz 3 (DE); GOELZER, Thomas, D-7141 Schwieberdingen (DE); KARL, Otto, D-7250 Leonberg-Hoefingen (DE); STREIB, Martin, D-7000 Stuttgart (DE); LOHSE, Mathias, D-7016 Gerlingen (DE); KELLER, Frieder, D-7526 Ubstadt-Weiher (DE)
(74) Vertreter: Friedmann, Jürgen, Dr.-Ing.
(86) Internationale Anmeldenummer: DE9000385
(87) Internationale Veröffentlichungsnummer: WO9102668

(56) Entgegenhaltungen:
- EP-A- 216 372
- DE-A- 3 611 949
- FR-A- 2 578 070
- GB-A- 2 158 610

## Beschreibung

### Stand der Technik

Die Erfindung betrifft ein Verfahren zur Datenübertragung in Datenverarbeitungsanlagen mit verteilten, untereinander über einen seriellen Datenbus kommunizierenden Signalverarbeitungsgeräten, zwischen denen Botschaften übermittelt werden.

Bei Datenverarbeitungsanlagen mit verteilten Datenverarbeitungsgeräten, die über einen seriellen Datenbus (CAN = Controller Aera Network) verbunden sind, treten bei zeitkritischen Funktionen gegebenenfalls Probleme auf, da es bei hoher Busbelastung zu Verzögerungen der zu übertragenen Botschaften kommen kann.

Es sind Verfahren mit synchroner Datenübertragung bekannt, bei denen es bei der Übertragung der Botschaft, z.B. in der Art "Jetzt Funktion X ausführen", aufgrund der genannten Übertragungsverzögerung zu Schwierigkeiten kommen kann, die erhebliche Einbußen bei der Steuergenauigkeit mit sich bringen.

Aus diesem Grunde ist man zu einer Prioritätsvergabe übergegangen, das heißt, Befehle zur Ausführung zeitkritischer Funktionen erhalten eine höhere Priorität auf dem Datenbus als andere Funktionen. Diese Prioritätssteuerung kann jedoch zu Konflikten führen, sobald mehr als eine zeitkritische Funktion über den Datenbus angesteuert wird. Überdies sind die Datenbusse derart organisiert, daß die Botschaft mit höchster Priorität zwar als nächste das Senderecht bekommt, eine schon begonnene Übertragung einer Botschaft mit niedrigerer Priorität aber nicht unterbrochen wird. Insofern können sich also auch bei Botschaften mit höchster Priorität unkalkulierbare Verzögerungen ergeben.

Ferner ist ein sogenannter Master-Slave-Bus bekannt. Bei diesem kontrolliert das Signalverarbeitungsgerät, das die Botschaft zur Ausführung einer zeitkritischen Funktion erteilt, den Verkehr auf dem Datenbus derart, daß dieser im entscheidenden Moment der Übertragung der zeitkritischen Funktion nicht belegt ist. Auch hier sind Konflikte zu erwarten, sobald mehrere zeitkritische Funktionen über den gleichen Datenbus angesteuert werden. Überdies muß die Anordnung so ausgebildet sein, daß alle zeitkritischen Botschaften von dem Signalverarbeitungsgerät kommen, das auch den Busverkehr kontrolliert. Dieses Signalverarbeitungsgerät ist somit zusätzlich mit der aufwendigen Aufgabe der Buskontrolle belastet.

Aus der DE-A 35 06 118 ist ein Verfahren zum Austausch von Botschaften für Datenübertragungen in einer Datenverarbeitungsanlage bekannt. In der Datenverarbeitungsanlage sind mehrere Teilnehmer über einen seriellen Bus miteinander verbunden. Die einzelnen Teilnehmer tauschen untereinander über den Bus Daten aus. Derartige Daten können z.B. Meßergebnisse von angeschlossenen Sensoren, Rechenergebnisse und Befehle zur Auslösung von Aktionen sein. Jede Botschaft enthält einen Identifier, der den Inhalt und die Priorität der Botschaft festlegt. Die Botschaften enthalten weiterhin einen Datenteil, in den die Meßdaten der verschiedenen Sensoren und auch die Befehle zur Auslbsung bestimmter Aktionen einschreibbar sind.

Es ist Aufgabe der Erfindung, Verzögerungen bei der Ausführung von über den Bus mit Hilfe von Botschaften übertragenen Befehlen zu verhindern.

### Vorteile der Erfindung

Das erfindungsgemäße Verfahren mit den im Hauptanspruch genannten Merkmalen hat demgegenüber den Vorteil, daß der Zeitpunkt der Übermittlung der Botschaft beliebig gewählt werden kann. Die Übermittlung muß lediglich vor Eintritt eines die Befehlsausführung auslösenden Ereignisses abgeschlossen sein. Es handelt sich um eine asynchrone Datenübertragung. Im befehlsempfangenden Signalverarbeitungsgerät läuft ein ereignisgesteuerter Kontrollalgorithmus ab, der bei Eintritt des Ereignisses die Befehlsausführung einleitet. Das Ereignis stellt eine Bedingung zur Ausführung des zugehörigen Befehls dar; es kann einen frei definierbaren zusammenhang von beliebigen Größen umfassen (alles, was man mathematisch als Gleichung oder Ungleichung formulieren kann, z.B. "Winkel = 70°", "Temperatur >120°C", oder "Druck ist ungleich 5 bar" usw.).

Wird nun z.B. über den Datenbus zu einem beliebigen Zeitpunkt (asynchron) eine Botschaft übertragen, welche aus Identifier, Befehl und Ereignis besteht, so wird der Befehl erst bei Eintritt des bedingenden Ereignisses ausgeführt. Hierzu ist dem Identifier ein spezieller Kontrollalgorithmus zugeordnet, dessen Start durch die im entsprechenden Signalverarbeitungsgerät ankommende Botschaft getriggert wird. Der Kontrollalgorithmus prüft von nun an ständig, ob das Ereignis eintrifft. Sobald dies der Fall ist, wird der zugehörige Befehl ausgeführt.

Das erfindungsgemäße Verfahren weist somit folgende Besonderheiten auf:
1) asynchrone Botschaften
2) Botschaftsformat: Befehl und Ereignis und
3) Eintrittskontrolle des Ereignisses im funktionsausführenden Datenverarbeitungsgerät.

Bei dem erfindungsgemäßen Verfahren tritt aufgrund der beschriebenen Asynchronität der entscheidende Vorteil auf, daß unkalkulierbare Verzögerungen auf dem Datenbus keinen Einfluß auf die Genauigkeit der Befehlsausführung haben. Die Daten sind - nach einem Ausführungsbeispiel der Erfindung - lediglich so früh abzuschicken, daß sie auch unter Annahme einer worst-case-Verzögerung noch vor Eintritt des Ereignisses ankommen. Demnach ist also die Übertragung der aus den Komponenten Identifier, Befehl und dem bedingenden Ereignis zur Ausführung des Befehls bestehenden Botschaft vor Eintritt des Ereignisses abgeschlossen. Etwaige Verzögerungen bei der Datenübertragung können insofern keinen Einfluß auf die Ausführungsgenauigkeit haben. Der Eintritt des Ereignisses führt durch den Kontrollalgorithmus zur Ausführung des Befehls, wobei entweder davon auszugehen ist, daß der Ereigniseintritt nicht über den seriellen Datenbus übertragen wird und demzufolge auch keine Zeitverzögerungen durch Busüberlastung auftreten können.

Insbesondere ist vorgesehen, daß das funktionsausführende Steuergerät ein Ereignis und/oder Befehlsregister aufweist, in denen das Ereignis bzw. der Befehl gespeichert werden. Mithin werden die Komponenten der Botschaft in den zugehörigen Registern abgelegt. Der Kontrollalgorithmus wird durch die ankommende Botschaft gestartet, so daß dieser von nun an das im Ereignisregister stehende Ereignis im Hinblick auf seine Erfüllung prüft. Tritt das Ereignis ein, so wird der im Befehlsregister stehende Befehl ausgeführt.

Nach einer Weiterbildung der Erfindung ist vorgesehen, daß der Identifier einen Teil oder den gesamten Befehl enthält. Mithin kann dieser Befehlsteil oder der Gesamtbefehl implizit im Identifier enthalten sein. Dieses hat zur Folge, daß für eine Botschaftsübertragung nur noch der Identifier und das Ereignis sowie gegebenenfalls noch der fehlende Teil des Befehls über den Bus übertragen werden muß. Der Kontrollalgorithmus hat den implizit im Identifier enthaltenen Befehlsteil oder Befehl fest einprogrammiert. Sofern -wie beschrieben- der Kontollalgorithmus den Teil des Befehls oder den gesamten Befehl als (fest) einprogrammierte Daten aufweist, tritt eine Vereinfachung insofern ein, als das Befehlsregister nur noch den übermittelten Befehlsteil speichern muß oder ein Befehlsregister entfallen kann, sofern dem Identifier der gesamte Befehl fest zugeordnet ist.

Fernerhin ist es nach einem bevorzugten Ausführungsbeispiel möglich, daß der Kontollalgorithmus das Ereignis als fest programmierte Daten aufweist. Das Ereignis, bei dem der Befehl ausgeführt werden soll, ist also immer das gleiche.

In diesem Falle kann sich die Übertragung auf Identifier und Befehl beschränken, so daß das Ereignisregister entfallen kann. Der Kontrollalgorithmus hat dann das Ereignis fest einprogrammiert.

Ferner ist es möglich, daß der Befehl und/oder das Ereignis implizit derart übertragen werden, daß das funktionsausführende Steuergerät die Botschaft nach einem mit dem Identifier verbundenen Algorithmus in ein oder mehrere zugehörige Befehls/Ereignispaare umformt. Befehl und Ereignis können somit implizit übertragen werden, das heißt, die Botschaft wird vom empfangenden Signalverarbeitungsgerät nach einem mit dem Identifier verbundenen Algorithmus bearbeitet und intern in andere Befehls/Ereignispaare umgerechnet. Diese Befehls/Ereignispaare werden dann gemäß dem bereits geschilderten Verfahren kontrolliert, das heißt, der vom Kontrollalgorithmus ständig einer Prüfung unterzogene Ereigniseintritt führt zur Ausführung des zugehörigen Befehls.

Schließlich ist nach einer besonderen Ausführungsform der Erfindung vorgesehen, daß der Kontrollalgorithmus sich derart ständig wiederholt, daß bei jedem wiederholten Eintritt des Ereignisses der zugehörige Befehl ausgeführt wird, was solange erfolgt, bis ein neues Befehls/Ereignispaar vorliegt. Damit kann das befehlsempfangende Signalverarbeitungsgerät gewisse, insbesondere periodische Funktionen auch dann ausführen, wenn das über den Datenbus übertragene, funktionssteuernde Befehls/Ereignispaar verspätet (also erst nach Eintritt des Ereignisses) oder gar nicht ankommt. In Erweiterung der zuvor beschriebenen Lösung, bei der zu jedem Identifier ein Befehls/ und ein Ereignisregister vorgesehen ist, gehört nun zu jedem autark auszuführenden Befehl ein separates Ereignisregister. Kommt ein Befehl und das zugehörige Ereignis über den Datenbus an, so wird das Ereignis in das zum Befehl gehörende Ereignisregister eingetragen. Zu jedem Ereignisregister gehört nun ein eigener Kontollalgorithmus, der ständig abläuft und bei Eintritt des Ereignisses für die Ausführung des Befehls sorgt. Wiederholt sich das Ereignis, so wird der Befehl erneut ausgeführt, ohne daß dazu das Eintreffen einer neuen Botschaft erforderlich ist. Dieses hat den Vorteil, daß Störungen in der Datenübertragung nicht zu Funktionsausfällen führen. Ferner können die worst-case-Zeitreserven bei der asynchronen Datenübertragung knapper kalkuliert werden, denn wenn die Botschaft doch einmal erst nach Eintritt des Ereignisses beim Signalverarbeitungsgerät eintrifft, so ist dieses weniger gravierend, da die Funktion mit den alten Parametern aufrechterhalten bleibt. Sofern eine Parameteraktualisierung (Veränderung des Befehls- und Ereignisinhalts) nicht erforderlich ist, kann auf eine Befehlsübertragung ganz verzichtet werden. Hierdurch wird der Datenbus und das befehlsgebende Signalverarbeitungsgerät entlastet.

### Zeichnung

Die Erfindung wird im folgenden anhand der Figuren näher erläutert. Es zeigen:
Figur 1 ein das erfindungsgemäße Verfahren erläuterndes Flußdiagramm und
Figur 2 ein Flußdiagramm einer weiteren Ausführungsform der Erfindung.

### Beschreibung des Ausführungsbeispiels

Ein modernes Konzept der Kraftfahrzeugelektronik sieht vor, daß bei einem verteilt angeordneten Steuerungssystem die einzelnen Komponenten über einen Datenbus (CAN) miteinander verbunden sind. Die Berechnung des Zündwinkels und die Ansteuerung der Zündstufen werden z.B. von zwei verschiedenen, untereinander durch den seriellen Datenbus verbundenen Steuergeräten durchgeführt. Das aussendende Steuergerät übermittelt über den Datenbus eine Botschaft B, die sich aus den Komponenten K: Identifier I, Befehl X und Ereignis Y zusammensetzt. Das Ereignis Y stellt eine Bedingung zur Ausführung des Befehls X dar, wobei die Befehlsausführung dann erfolgt, wenn das Ereignis Y eintritt.

Die Botschaft hat somit die Form:
"Aktion (Befehl x) ausführen, wenn ein bestimmtes Ereignis (y) eintritt".

Über den Datenbus kann die Botschaft B zu einem beliebigen Zeitpunkt (asynchron) übertragen werden. Jedem für das Modul des entsprechenden Steuergeräts relevanten Identifier I ist ein Ereignisregister und ein Befehlsregister zugeordnet, in die das Ereignis Y und der Befehl X eingetragen werden.

Ferner gehört zu jedem Identifier I ein spezieller Kontrollalgorithmus A, dessen Start durch die ankommende Botschaft B getriggert wird. Der Kontrollalgorithmus A prüft nach der Triggerung ständig, ob das im entsprechenden Ereignisregister stehende Ereignis Y erfüllt ist. Sobald letzteres der Fall ist, wird der im entsprechenden Befehlsregister stehende Befehl X ausgeführt.

### Beispiel:

Der Befehl X lautet: "Einspritzventil für Zylinder 3 öffnen". Das bedingende Ereignis Y lautet: "Kurbelwellenwinkel ist gleich 70°".

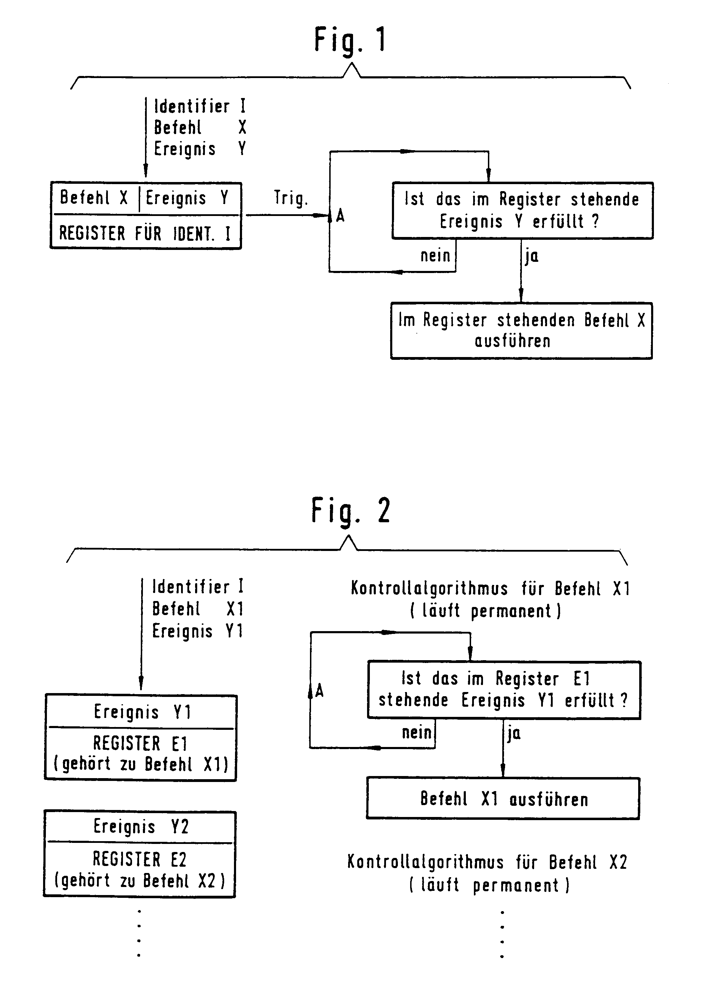

Eine derartige Botschaft B wird beim Eintreffen abgespeichert, das heißt der Befehl X wird in das Befehlsregister und das Ereignis Y in das zugehörige Ereignisregister eingeschrieben. Ferner wird -wie bereits ausgeführt- der zum entsprechenden Identifier I gehörende Kontrollalgorithmus A gestartet. Dieser kontrolliert nun ständig den Kurbelwellenwinkel. Sobald dieser die Stellung 70° erreicht, wird der im Befehlsregister stehende Befehl X ("Einspritzvenil für Zylinder 3 öffnen") ausgeführt. Der zuvor beschriebene Ablauf ist in der Figur 1 verdeutlicht.

Ferner ist es möglich, eine feste Implementierung von Befehlsteilen vorzunehmen. Dieses bedeutet, daß ein Teil des Befehls X implizit im Identifier I enthalten ist. Insofern wird über den Datenbus nur noch der Identifier I, das Ereignis Y und der fehlende Teil des Befehls X übertragen. Im Befehlsregister wird nur noch der übermittelte Teil des Befehls X gespeichert. Der Kontrollalgorithmus A hat den implizit im Identifier I enthaltene Teil des Befehls X fest einprogrammiert.

### Beispiel:

Einem Identifier I ist fest der Teil des Befehls X "Einspritzventil öffnen" zugeordnet. Der zu übermittelnde Befehl X verkürzt sich dann zu:
Befehl: "Zylinder 3". Das zugehörige Ereignis lautet: "Kurbelwellenwinkel ist gleich 70°".

Hieraus ist ersichtlich, daß der Kontrollalgorithmus A den Teil des Befehls X "Einspritzventil öffnen" fest einprogrammiert hat; dieser wird ergänzt durch den im Befehlsregister stehenden Teil "Zylinder 3".

Nach einer weiteren Variante kann der ganze Befehl X fest implementiert sein. Hierbei ist einem bestimmten Identifier I fest der gesamte Befehl X zugeordnet. Damit kann das Befehlsregister entfallen.

Die Botschaft B setzt sich somit nur noch aus dem Identifier I und dem Ereignis Y zusammen, so daß nur diese Komponenten K über den Datenbus übertragen werden. In dem dem Identifier I zugeordneten Kontrollalgorithmus A ist der Befehl X fest programmiert.

### Beispiel:

Identifier I bedeutet: "Einspritzventil Zylinder 3 öffnen". Übermittelt wird dann außer dem Identifier I nur noch das Ereignis Y. Dieses lautet: "Kurbelwellenwinkel ist gleich 70°".

Der dem Identifier I zugeordnete Kontrollalgorithmus A hat somit das feste Programm, bei Eintritt des Ereignisses Y das Einspritzventil für Zylinder 3 zu öffnen.

Eine weitere Variante der Erfindung ist durch eine feste Implementierung des Ereignisses Y gekennzeichnet.

Bei dieser Variante ist somit das Ereignis Y, bei dem der Befehl X ausgeführt werden soll, immer gleich. In diesem Falle kann sich die Übertragung auf den Identifier I und den Befehl X beschränken, so daß das Ereignisregister entfallen kann. Der Kontrollalgorithmus A hat dann das Ereignis Y fest einprogrammiert.

### Beispiel:

Der oder die Befehle X sollen immer bei 100° Kurbelwellenwinkel ausgeführt werden. Übertragen wird dann außer dem Identifier I beispielsweise der Befehl: "Einspritzventil für Zylinder 3 öffnen".

Der Kontrollalgorithmus A prüft daraufhin den Kurbelwellenwinkel, ob dieser den Wert 100° erreicht und öffnet bei Eintritt des Ereignisses das Einspritzventil für Zylinder 3.

Nach einer anderen Variante ist eine implizite Übertragung von Befehl X und Ereignis Y möglich. Bei dieser impliziten Übertragung wird die Botschaft von dem empfangenden Modul des Steuergeräts nach einem mit dem Identifier I verbundenen Algorithmus bearbeitet und intern in andere Befehls/Ereignispaare umgerechnet.

### Beispiel:

Die übertragende Botschaft B lautet: "10 ms einspritzen, so daß das Ende der Einspritzung bei 200° Kurbelwellenwinkel liegt".

Beträgt die Winkelgeschwindigkeit der Kurbelwelle beispielsweise 10° pro ms, so kann das Modul diese Botschaft B intern in zwei asynchrone Befehls/Ereignisspaare umrechnen. Diese lauten:

Befehl X1: "Öffene Einspritzventil und starte Timer".

Ereignis Y1: "Kurbelwellenwinkel ist gleich 100°".

Befehl X2: "Schließe Einspritzventil".

Ereignis Y2: "Timer steht auf 10 ms".

Das befehlsausführende Steuergerät benötigt für die Befehlsausführung gemäß der zuvor erwähnten Beispiele stets Kenntnis über den jeweils vorliegenden Kurbelwellenwinkel. Die Daten des Kurbelwellenwinkels stehen entweder über andere Datenübertragungsstrecken als den zuvor erwähnten seriellen Datenbus zu Verfügung oder werden vom befehlsausführenden Steuergerät selbst kontrolliert.

Nach einer weiteren Variante sind ferner autarke Funktionen von den befehlsempfangenden Steuergeräten möglich. Dieses bedeutet, daß die befehlsempfangenden Module gewisse (quasi-) periodische Funktionen auch dann ausführen, wenn das über den Datenbus zu übertragende, funktionssteuernde Befehls/Ereignispaar verspätet (also erst nach Eintritt des Ereignisses Y) oder gar nicht ankommt. Diese Variante ist zur Verdeutlichung in der Figur 2 graphisch wiedergegeben. Hier gehört zu jeden autark auszuführenden Befehl X1..Xn ein separates Ereignisregister E1..En. Kommt nun ein Befehl Xi und das zugehörige Ereignis Yi über den Datenbus an, so wird das Ereignis Yi in das zum Befehl Xi gehörende Ereignisregister Ei eingetragen. Zu jedem Ereignisregister Ei gehört ein eigener Kontrollalgorithmus, der ständig abläuft und bei Eintritt des Ereignisses Yi für die Ausführung des Befehls Xi sorgt. Wiederholt sich das Ereignis Yi, so wird der Befehl Xi erneut ausgeführt, ohne daß dazu das Eintreffen einer neuen Botschaft B erforderlich ist.

### Beispiel:

Der Zündwinkel wird in einem befehlsgebenden, zentralen Steuergerät berechnet. Die Zündung von sechs Zylindern wird dagegen von einem anderen, vor Ort montierten Steuergerät ausgelöst. Die vom zentralen Steuergerät abgeschickten Botschaften B bestehen dann neben dem Identifier I aus den sechs Befehls/Ereignispaaren:

Befehl X1: "Zylinder 1 zünden"

Ereignis Y1: "Bei 10° vor OT (oberer Totpunkt) Zylinder 1"

Befehl X2:"Zylinder 2 zünden"

Ereignis Y2: "Bei 18° vor OT Zylinder 2"
.
.
.
usw .

Im Ereignisregister E1 steht nun "10° vor OT Zylinder 1"; im Ereignisregister E2 steht "18° vor OT Zylinder 2" usw. Die sechs Kontrollalgorithmen laufen ständig ab. Immer wenn der Kurbelwellenlwinkel gleich 10° vor OT von Zylinder eins ist, wird Zylinder 1 gezündet; immer wenn der Kurbelwellenwinkel gleich 18° vor OT von Zylinder 2 ist, wird Zylinder 2 gezündet, usw.

Die Anordnung ist dabei so getroffen, daß das Modul des Steuergeräts vor Ort jeweils die letzten Parameter speichert und daß diese Funktion solange mit den alten Parametern ausgeführt wird, bis das entsprechende Befehls/Ereignispaar mit neuen Parametern empfangen wird.

Dieses hat den Vorteil, daß Störungen der Datenübertragung nicht zu Funktionsausfällen führen. Ferner können die worst-case-Zeitreserven sehr knapp kalkuliert werden, da dann, wenn die Botschaft erst nach Eintritt des Ereignisses eintrifft, die Funktion mit den alten Parametern aufrechterhalten bleibt. Ist keine Parameteraktualisierung erforderlich, kann auf eine Befehlsübertragung ganz verzichtet werden. Die Belastungen von Datenbus und befehlsgebendem Steuergerät werden dadurch reduziert.

## Patentansprüche

1. Verfahren zur Datenübertragung in Datenverarbeitungsanlagen mit verteilten, untereinander über einen seriellen Datenbus kommunizierenden Signalverarbeitungsgeräten, insbesondere Steuergeräte für Kraftfahrzeuge, wie Zündgeräte, Einspritzgeräte, Bremsgeräte und/oder Getriebesteuergeräte, zwischen denen Botschaften übermittelt werden, wobei eine Botschaft mindestens einen Identifier aufweist,dem ein Befehl zugeordnet wird, dadurch gekennzeichnet, daß der Botschaft zusätzlich ein bedingendes Ereignis (Y) zur Ausführung des Befehls (X) zugeordnet wird, daß mindestens der Identifier (I) zu einem beliebigen Zeitpunkt vor Eintritt des bedingenden Ereignisses (Y) zur Ausführung des Befehls (X) über den Datenbus zum funktionsausführenden Signalverarbeitungsgerät übertragen wird, wobei dem Identifier (I) im funktionsausführenden Signalverarbeitungsgerät ein den Eintritt des Ereignisses (Y) prüfender Kontrollalgorithmus (A) zugeordnet wird, der bei Ereigniseintritt die Befehlsausführung auslöst.

2. Verfahren nach Anspruch 1, **dadurch gekennzeichnet**, daß das funktionsausführende Signalverarbeitungsgerät ein Ereignis- und/oder ein Befehlsregister aufweist, in denen das Ereignis (Y) bzw. der Befehl (X) gespeichert werden.

3. Verfahren nach einem der vorhergehenden Ansprüche, **dadurch gekennzeichnet**, daß der Kontrollalgorithmus (A) durch die ankommende Botschaft (B) getriggert wird.

4. Verfahren nach einem der vorhergehenden Ansprüche, **dadurch gekennzeichnet**, daß der Identifier (I) einen Teil des Befehls oder den gesamten Befehl (X) enthält.

5. Verfahren nach einem der vorhergehenden Ansprüche, **dadurch gekennzeichnet**, daß der Kontrollalgorithmus (A) den Teil des Befehls (X) oder den gesamten Befehl (X) als vorzugsweise fest einprogrammierte Daten aufweist.

6. Verfahren nach einem der vorhergehenden Ansprüche, **dadurch gekennzeichnet**, daß der Kontrollalgorithmus (A) das Ereignis (Y) als vorzugsweise fest einprogrammierte Daten aufweist.

7. Verfahren nach einem der vorhergehenden Ansprüche, **dadurch gekennzeichnet**, daß der Befehl (X) und/oder das Ereignis (Y) implizit derart übertragen werden, daß das funktionsausführende Signalverarbeitungsgerät die Botschaft (B) nach einem mit dem Identifier (I) verbundenen Algorithmus in ein oder mehrere zugehörige Befehls/ und Ereignispaare umrechnet.

8. Verfahren nach einem der vorhergehenden Ansprüche, **dadurch gekennzeichnet**, daß der Kontrollalgorithmus (A) sich derart ständig wiederholt, daß bei jedem wiederholten Eintritt des Ereignisses (Y) der zugehörige Befehl (X) ausgeführt wird, was solange erfolgt, bis ein neues Befehls/ Ereignispaar vorliegt.

## Claims

1. Method for transmitting data in data processing systems with distributed signal processing devices, in particular control devices for motor vehicles, such as ignition devices, injection devices, brake devices and/or transmission control devices, which communicate with one another via a serial data bus, messages being transmitted between the said devices and one message having at least one identifier to which an instruction is assigned, characterised in that the message is additionally assigned a determining event (Y) for the execution of the instruction (X), that at least the identifier (I) is transmitted at any desired time before the occurrence of the determining event (Y) for the execution of the instruction (X) via the data bus to the function-executing signal processing device, the identifier (I) in the function-executing signal processing device being assigned a control algorithm (A) which tests for the occurrence of the event (Y) and triggers the execution of the instruction when the event occurs.

2. Method according to Claim 1, characterised in that the function-executing signal processing device has an event register and/or an instruction register in which the event (Y) or the instruction (X) is stored.

3. Method according to one of the preceding claims, characterised in that the control algorithm (A) is triggered by the incoming message (B).

4. Method according to one of the preceding claims, characterised in that the identifier (I) contains part of the instruction or the entire instruction (X).

5. Method according to one of the preceding claims, characterised in that the control algorithm (A) has the part of the instruction (X) or the entire instruction (X) as preferably permanently programmed-in data.

6. Method according to one of the preceding claims, characterised in that the control algorithm (A) has the event (Y) as preferably permanently programmed-in data.

7. Method according to one of the preceding claims, characterised in that the instruction (X) and/or the event (Y) are transmitted implicitly in such a way that the function-executing signal processing device converts the message (B) into one or more associated instruction/and event pairs according to an algorithm connected to the identifier (I).

8. Method according to one of the preceding claims, characterised in that the control algorithm (A) is continuously repeated in such a way that the associated instruction (X) is executed upon each repeated occurrence of the event (Y), which takes place until a new instruction/event pair is present.

## Revendications

1. Procédé de transmission de données dans des installations de traitement de données à appareils de traitement de signaux répartis, communiquant entre eux par un bus de données série, notamment appareils de commande pour véhicule automobile tels qu'appareil d'allumage, appareil d'injection, appareil de freinage et/ou appareil de commande de boîte de vitesses, entre lesquels il faut échanger des messages, un message comprenant au moins un identificateur auquel est associé un ordre, procédé caractérisé en ce qu'aux messages on associe en outre un événement conditionnel (Y) pour l'exécution de l'ordre (X) et au moins l'identificateur (I) à un instant quelconque avant l'arrivée de l'événement conditionnel (Y) pour l'exécution de l'ordre (X) est transmis par le bus de données vers l'appareil de traitement de signaux exécutant la fonction, un algorithme de contrôle (A) vérifiant l'arrivée de l'événement (Y) étant associé l'identificateur (I) dans l'appareil de traitement de signal exécutant la fonction, cet algorithme déclenchant l'exécution de l'ordre à l'arrivée de l'événement.

2. Procédé selon la revendication 1, caractérisé en ce que l'appareil de traitement de signal exécutant la fonction comprend un registre d'événements et/ou d'ordres dans lequel on enregistre l'événement (Y) ou l'ordre (X).

3. Procédé selon l'une des revendications précédentes, caractérisé en ce que l'algorithme de contrôle (A) est déclenché par l'arrivée du message (B).

4. Procédé selon l'une des revendications précédentes, caractérisé en ce que l'identificateur (I) contient une partie de l'ordre ou l'ensemble de l'ordre (X).

5. Procédé selon l'une des revendications précédentes, caractérisé en ce que l'algorithme de contrôle (A) contient comme donnée programmée de préférence de manière fixe, la partie de l'ordre (X) ou l'ensemble de l'ordre (X).

6. Procédé selon l'une des revendications précédentes, caractérisé en ce que l'algorithme de contrôle (A) contient l'événement (Y) comme donnée programmée de préférence de manière fixe.

7. Procédé selon l'une des revendications précédentes, caractérisé en ce que l'ordre (X) et/ou l'événement (Y) sont transmis implicitement en ce que l'appareil de traitement de signal exécutant la fonction transforme par calcul le message (B) selon un algorithme lié à l'identificateur (I) en une ou plusieurs paires correspondantes ordre/événement.

8. Procédé selon l'une des revendications précédentes, caractérisé en ce que l'algorithme de contrôle (A) se répète en permanence de façon que pour chaque arrivée répétée de l'événement (Y), l'ordre (X) correspondant soit exécuté jusqu'à l'arrivée d'une nouvelle paire ordre/événement.
